# EUROPEAN PATENT APPLICATION

(11) **EP 2 631 219 A1**
(43) Date of publication of application: **28.08.2013**
(21) Application number: 12156586.5
(22) Date of filing: 22.02.2012
(51) Int. Cl.: C02F 3/34

(54) **Method for the reduction of total organic carbon in hypersaline water**

(71) Applicant: ThyssenKrupp Uhde GmbH, 44141 Dortmund (DE)
(72) Inventor: Herwig, Christoph, 1130 Wien (AT); Rittmann, Simon, 1030 Wien (AT); Lorantfy, Bettina, 1140 Wien (AT); Jazini, Mohammadhadi, 1060 Wien (AT); Henssen, Gerhard, Dr., 44139 Dortmund (DE); Pohl, Werner, 45149 Essen (DE)
(74) Representative: Michalski Hüttermann & Partner Patentanwälte

(57) **Abstract**

The present invention is directed to a method for the reduction of total organic carbon in a hypersaline solution by mixing the solution with at least one halophilic and/or haloalkaliphilic microorganism suspension and cultivate this composition under defined conditions at which the microorganisms are able to metabolize propane-1,2,3-triol, acetates, and/or oligomers and derivates thereof, as part of the total organic carbon content.

## Description

The present invention is directed to a method for the reduction of total organic carbon in hypersaline water.

### BACKGROUND OF THE INVENTION

Hypersaline solutions are an important raw material for different chemical processes. One of the most important processes worldwide is the electrolysis of sodium chloride solution for the production of chlorine. This membrane based process is feed with saturated sodium chloride solution with a saline content of up to 25 wt.-%. Due to the high sensitivity of the membrane to the impurities, sodium chloride feed stream must be clean enough to avoid the damage of the membrane which affects significant decrease in membrane lifetime and voltage increase.

Therefore, the removal of the undesired components from the feed stream must be done before the electrolysis. Effluent brines from other industrial processes may be usable as a feed stream to this electro-membrane process. Since effluent brines usually contain high amount of organic carbon, it is necessary to reduce the total organic carbon (TOC) content as much as it is required by the electro-membrane process.

Although chemical treatment of hypersaline solutions is possible, the TOC cannot be reduced to the acceptable limit. Hence, biological treatment was recommended as an alternative method to achieve this goal.

The US Patent Application 2011/0180475 is directed to a process for the treatment of wastewater by adding a consortium of isolated halophilic microorganisms capable of biodegrading crude oil in brine. The TOC content of the wastewater varies between 550 mg/l and 600 mg/l. The hydrocarbon content is reduced by a batch fermentation combined with a membrane based process, whereby type and characteristics of the metabolized ingredients is not further differentiated. Moreover, the wastewater has a salinity of approximately 3,5 wt.-%, which is far away from the requested salinity necessary for the effective electrolysis of sodium chloride solution for the production of chlorine.

Several other publications are directed to the biological treatment of wastewater with a salinity of up to 15%, but no one deals with saline content of more than 15% as it is necessary for feeding the chlorine electrolysis (References 1 to 6). Moreover, the measurement of the organic carbon content in total impedes differentiated view on consumption of specific carbon ingredients. Detailed analysis of the carbon constituents would lead to a more optimized feed stream and metabolism by the microorganisms.

Thus, the underlying problem of the invention is to provide a biological method for the reduction of specific substances as part of the total organic carbon (TOC) in hypersaline solution.

### SUMMARY OF INVENTION

The problem is solved by a method, medium and mixture according to the independent claims. The dependent claims are directed to specific embodiments of the invention.

This problem is solved by a method for the reduction of total organic carbon in a hypersaline solution, including the following steps:
a) provision of a composition by mixing the hypersaline solution or different constituents of the hypersaline solution with at least one cultured halophilic and/or haloalkaliphilic microorganism suspension,
b) cultivation of the mixture provided in step a) under defined conditions at which the microorganisms are able to metabolize propane-1,2,3-triol, acetates, and/or oligomers and derivates thereof, as part of the total organic carbon content, and thereby reduction of the total organic carbon.

### DEATAILED DESCRIPTION OF INVENTION

The present invention relates to a method for the reduction of total organic carbon in a hypersaline solution, including the following steps:
a) provision of a composition by mixing the hypersaline solution or different constituents of the hypersaline solution with at least one cultured halophilic and/or haloalkaliphilic microorganism suspension,
b) cultivation of the mixture provided in step a) under defined conditions at which the microorganisms are able to metabolize propane-1,2,3-triol, acetates, and/or oligomers and derivates thereof, as part of the total organic carbon content, and thereby reduction of the total organic carbon.

The term "total organic carbon" (TOC) describes the total carbon content of the saline solution, irrespective if the carbon is available to biological consumption or not. The TOC content can be expressed in ppm or mg/l in relation to the hypersaline solution.

The term "hypersaline solution" describes saturated solutions with a high salinity. The solutions are mostly suitable for the production of chlorine in electrolysis. The term "different constituents" of the hypersaline solution means all constituents which are necessary to cultivate the added suspension of microorganisms without taking the whole solution. Brine is an industrial product in terms of hypersaline solution and therefore used in parallel to the term "hypersaline solution".

The term "halophilic" or "haloalkaliphilic" with respect to the microorganism suspension describes at least one microorganism that is isolated from saline or hypersaline environment and provide as suspension. The suspension can also comprise a consortium of halophilic/haloalkaliphilic microorganisms. These microorganisms are able to metabolize organic carbon, in particular glycerol, in a hypersaline environment.

Regarding analysis results, the majority of the TOC content in the hypersaline solution was glycerol (propane-1,2,3-triol), 2,3-epoxy-1-propanol, 2,3-dichlor-1-propanol, moreover, even its derivatives in lower amounts. Besides glycerol also acetates and/or derivates and oligomers are main constituents of the organic carbon content.

Therefore, it is a main goal of the present invention to provide strains which are able to consume glycerol, besides other carbon sources named above, as a main organic carbon source in hypersaline environments. Thereafter, it is also necessary to quantitatively discover the bioprocesses, such as describing as well as quantifying the metabolism on glycerol and investigating the most determining process parameters.

In a preferred embodiment of the invention the hypersaline solution has a salinity of at least ≥15 %, preferably ≥20 %, more preferably ≥25 %. This range is the ideal content when used as feed stream in chlorine production by electrolysis. This saline content can be found in different industrial wastewater. Thus, in another preferred embodiment of the invention the hypersaline solution is industrial wastewater, preferable brine.

The search for potential microorganisms which can survive in hypersaline environments and are able to metabolize glycerol as a carbon source led to a list of halophilic and haloalkaliphilic strains that were tested on their growth conditions as well as their media optimums. The isolated microorganism can be serve a suspension of a single strain or as consortium of different strains cultivated in common. This suspension is added to the hypersaline solution thereby forming a composition of the hypersaline solution and the microorganism.

In a preferred embodiment of the invention the microorganisms in the microorganism suspension is selected from the group of halophilic strains consisting of *Haloferax mediterranei, Halobacterium salinarum* and *Salinibacter ruber* or is selected from the group of haloalkaliphilic strains consisting of *Natronomonas pharaoni*, *Natronobacterium gregoryi*, *Natronobacterium magadii, Halorubrum vacuolatum, Natronococcus amylolyticus, Natronococcus occultus* and *Natronorubrum tibetense.*

Regarding the results of shake-flask experiments, the analytic results showed that glycerol; cyclic glycerol and tri-glycerol can be taken up considerably by two of the halophilic strains, *Haloferax mediterranei* (HFX) and *Halobacterium salinarum* (NRC). *Halobacterium salinarum* could only be cultivated on a defined medium, which contains amino acids. Concerning further scale-up issues, the utilization of amino acids in the medium for the strains are difficult to be carried out in industrial scale. Hence, in a preferred embodiment the microorganism suspension is based on the halophilic strain *Haloferax mediterranei.* Regarding inhibitory effects by organic brine compounds, it is also a plus for the HFX strain that is capable of growing on diverse aromatic compounds, e.g. benzoate [reference: 7]. Hence, toluene is expected to have no inhibitory effect and is metabolized by HFX and other halophilic microorganisms. Haloalkaliphilic strains are also suitable to use in industrial scale, depending on their specific growth rate in hypersaline solution.

In a further embodiment, the hypersaline solution has an initial total organic carbon content (TOC) in the range of 400 ppm to 2500 ppm, preferably 600 ppm to 2500 ppm and a remaining total organic carbon content of less than 100 ppm, preferably less than 50 ppm, more preferably less than 10 ppm. This is the desired residual content for the electrolysis feed stream. The residual glycerol concentration is also a cornerstone in the method. If the method is carried out as continuous fermentation and the culture residual substrate concentration is not zero in steady-state, the culture is not only limited by the C-source, other limitations are also present. Pulse experiments with different pulses of Phosphate, Sulphate as well as trace element lead to the conclusion that there were no limitation in the culture on the main medium components (Phosphate, Sulphate, Magnesium), but when trace elements solution (Fe, Cu, Mn, Zn) was pulsed, the activity in the bioreactor increased. Therefore, trace element solution has to be added preferably at the beginning of the cultivation.

Thus, in a preferred embodiment of the invention a defined medium is added to the composition provided in step a). This defined medium includes all necessary growth elements for the strains that are not present in the hypersaline solution. The medium is as such a nutrient or culture medium for the strains, chosen before. It can be provided as standard medium with all necessary elements or as reduced medium, e.g. trace elements, in addition to the elements already present in the hypersaline solution.

It was the goal of the present invention to have a cultivation that is limited by one parameter, namely the C-source and thus decreasing the organic carbon concentration as much as possible. Nevertheless, other limitations could have significant impact on the cultivation of the microorganisms. Therefore, the cultivation has been optimized due to several parameters. In a preferred embodiment, the cultivation is based on defined conditions comprising the following fermentation process parameter:
- pH in the range of 6,8 to 9,5, preferably 6,8 to 8,0 for halophilic microorganism suspension and 8,0 to 9,5 for haloalkaliphilic microorganism suspension, and/or
- temperature in the range of 36°C to 39°C, preferably 38°C, and/or
- agitation in the range of 200 rpm to 700 rpm, preferably 300 rpm to 600 rpm, more preferably 400 rpm to 500 rpm, and/or
- air inlet in the range of 0,1 to 1, 5 vvm, preferably 0,15 to 1 vvm, more preferably 0,2-0,5 vvm

The pH range depends on the specific choice of the microorganism strains. For halophilic and/or haloalkaliphilic microorganisms is the pH range from 6,8 to 9,5. The same applies for the cultivation temperature which also depends on the choice of the strains and could vary from 36°C up to 39°C. The selection of the right agitation is affected by the balance between disruption of cells and increase of cell activity in the bioreactor. The air inlet varies in a range of 0,1 to 1,5 vvm (volume gas per volume reactor and minute).

In a further embodiment the cultivation in step b) leads to a growth rate of the microorganisms that ranges from 0,010 1/h to 0,045 1/h, preferably 0,020 to 0,035 1/h. The exponential growth phase can be characterized by the base consumption, since the exponential curve, which can be fit to the base consumption curve, shows the maximum growth rate (µₘₐₓ) in the batch phase.

In another preferred embodiment the method is carried out as batch, fed-batch or continuous fermentation process in a non-corrosive bioreactor. For example a special non-corrosive borsilicate bioreactors is Labfors PEEK by Infors AG, Switzerland.

Another aspect of the invention is directed to a medium composition for halophilic microorganisms, preferably *Haloferax mediterranei,* comprising the following components:

| | |
|---|---|
| Glycerol | 1,5 to 10 to g/l, |
| NH₄Cl | 2 g/l, |
| KH₂PO₄ | 0,06 to 0,3 g/l, |
| FeCl₃ | 0,005 g/l, |
| NaCl | 194 to 250 g/l, |
| MgCl₂ x 6H₂O | 3,2 to 16 g/l, |
| MgSO₄ x 7H₂O | 4,8 to 24 to g/l, |
| CaCl₂ x 6H₂O | 1 g/l, |
| KCl | 5 g/l, |
| NaHCO₃ | 0,2 g/l, |
| KBr | 0,5 g/l, and |
| Trace element solution (Fe, Cu, Mn, Zn) 1 ml. | |

The medium is as such a synthetic one and can be used for the pre-cultivation of the strains as well as in combination with the hypersaline solution. Ideal growing conditions of halophiles, with Labfors PEEK reactor are given by applying the following parameters:
Temperature: 38°C
pH: 7.2 for halophiles, pH: 9.2 for haloalkaliphile strains
Agitation: 400 rpm
Air inlet: 0,2 vvm (0,2 NL/min)

Another aspect of the invention is directed to the mixture of the medium composition and at least one cultured halophilic microorganism suspension, preferably *Haloferax mediterranei*, and hypersaline brine, wherein the concentration of the brine in relation to the mixture is ≤ 90 %, preferably ≤ 75%, more preferably ≤ 50%.

Yet another aspect of the invention is directed to the use of halophilic and/or haloalkaliphilic microorganisms in a method as described above.

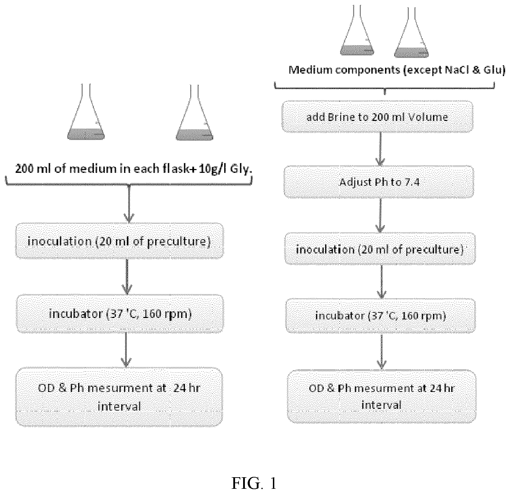

The present invention will be explained in greater detail using the following examples and the discussion of Figs. 1 to 6. It should be noted that the example and the figures are provided merely for descriptive purposes; they are not intended to be a limitation of the invention in any way.

### EXAMPLES:

### Example 1: selection of microorganisms

The following strains were provided by the DSMZ. Numbers behind the strains indicate the DSMZ ID:
- *Halobacterium salinarum (DSMZ No. 3754),*
- *Haloferax mediterranei (DSMZ No. 1411),*
- *Salinibacter ruber (DSMZ No. 13855),*
- *Natronomonas pharaonis (DSMZ No. 2160),*
- *Natronobacterium gregoryi (DSMZ No. 3393),*
- *Natronobacterium magadii (DSMZ No. 3394),*
- *Halorubrum vacuolatum (DSMZ No. 8800),*
- *Natronococcus amylolyticus (DSMZ No. 10524),*
- *Natronococcus occultus (DSMZ No. 3396) and*
- *Natronorubrum tibetense (DSMZ No. 13204).*

The selected microorganisms were cultivated in shake flasks both in their complex as well as defined media and in brine.

To observe the changes in the TOC and especially mainly in the glycerol content of the media and of the brine during cultivation, samples were analyzed and the results of analysis were cross validated.

The strains were cultivated in shake-flasks. Regarding the results of the shake-flask experiments, the analytic results showed that glycerol; cyclic glycerol and tri-glycerol can be taken up considerably by two chosen halophilic strains, *Haloferax mediterranei* (HFX) and *Halobacterium salinarum* (NRC). The best defined media and pH ranges were also chosen for both strains for further quantitative studies in bioreactor. For the haloalkaliphilc strains, four of them (*Natronomonas pharaonis, Natronococcus occultus, Halorubrum vacuolatum, Natronorubrum tibetense*) were successfully cultivated in defined medium with the carbon source glycerol in shake flasks. Due to the limitations of the shake-flask experiments, e.g. no pH control or no aeration can be done; further consequences could not be drawn. Hence, further study were carried out in bioreactor, which is suitable for cultivations in hypersaline environments and equipped with non-corrosive elements.

### Example 2: Cultivation in bioreactor

For the cultivation studies, special non-corrosive Labfors PEEK (Infors AG, Switzerland) bioreactor was utilized with the following technical specifications:
Borosilicate glass culture vessel: 2L total volume
Borosilicate glass exhaust gas cooling
Special corrosion resistant Polymer (PEEK) bioreactor top lid
Special corrosion resistant Polymer (PEEK) thermometer holder
Borosilicate glass sampling tube and gas inlet tube
Glass coating on the agitator
Borosilicate glass jacket on the reactor vessel

The following online analytics were supplied:
Exhaust gas CO2
Exhaust gas 02
Glass probe pH
Hastelloy Clark pO2 and
Thermal Mass flow controller for air

The goal was to find the defined media for the strains, which have a relatively simple composition (e.g. without amino acids) and contains only compounds which can easily be removed after the TOC elimination process and before the electrolysis. The strain HFX was chosen to carry out batch and continuous experiments in the bioreactor. The defined medium for the strain HFX was the following (Table 1):

| Component | g/L |
|---|---|
| Glycerol | 10 |
| NH₄Cl | 2 |
| KH₂PO₄ | 0.3 |
| FeCl₃ | 0,005 |
| NaCl | 194 |
| MgCl₂.6H₂O | 16 |
| MgSO₄.7H₂O | 24 |
| CaCl₂.6H₂O | 1 |
| KCl | 5 |
| NaHCO₃ | 0,2 |
| KBr | 0,5 |
| pH | 7,2 |
| Trace element solution (Fe, Cu, Mn, Zn) | 1mL |

The defined medium for the haloalkaliphilc strains were as follows (Table 2):

| Component | g/L |
|---|---|
| Glycerol | 10 |
| NaCl | 198,7 |
| Na₂CO₃ | 18,55 |
| KCl | 2,01 |
| Na₂HPO₄.7H₂O | 0,32 |
| NaH₂PO₄.7H₂O | 0,49 |
| MgSO₄.7H₂O | 0,246 |
| pH | 9,2 |
| Trace element solution (Fe, Cu, Mn, Zn) | 1mL |

In order to obtain the ideal growing conditions of halophiles, with Labfors PEEK reactor the following parameters can be monitored as well as controlled:
Temperature: 38°C
pH: 7.2 for halophiles, pH: 9.2 for haloalkaliphile strains
Agitation: 400 rpm
Air inlet: 0,2 vvm (0,2 NL/min)

Due to the limited growth of the haloalkaliphilic strains in bioreactor, further experiments were limited to halophilic strains, in particular HFX.

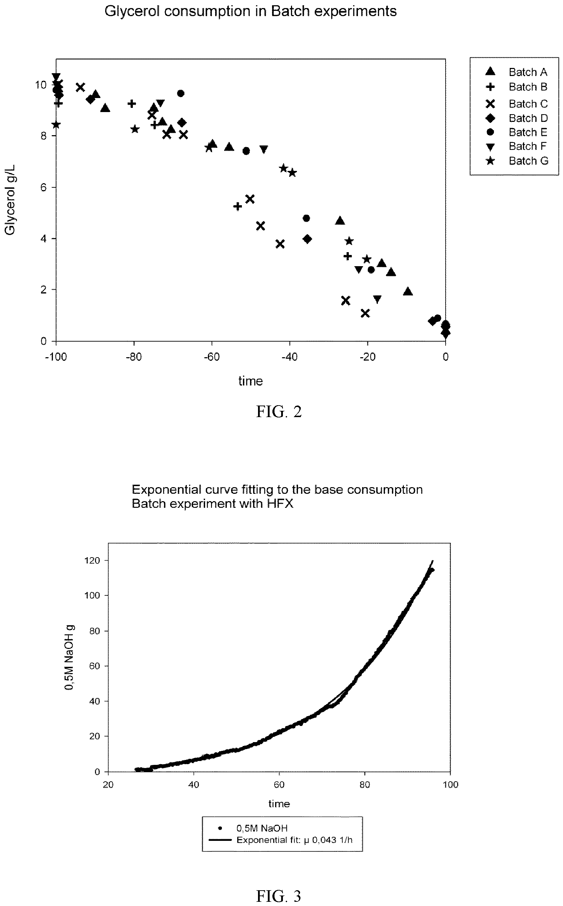

The aim of the batch experiments was to investigate the feasibility of the cultivation of halophiles on defined medium in the bioreactor. The main markers of growth in the exponential growth phase, for instance, the base consumption and the substrate uptake, can be observed (Fig. 2 and Fig. 3). Fig. 2 shows the characteristics of the substrate uptake in different batch experiments. The exponential growth phase can be characterized by the base consumption, since the exponential curve, which can be fit to the base consumption curve, shows the maximum growth rate (µₘₐₓ) in the batch phase. On Fig. 3, the exponent of the fitted exponential curve gives estimation to the maximum growth rate (µ value, 0,043 1/h).

After the strain HFX could successfully be cultivated on defined medium with the given C-source glycerol in the bioreactor, continuous experiments were also carried out on defined medium. The first task was to specify the options for optimal dilution rates for the strain HFX which is high as possible but also less than the maximal growth rate. In the course of the continuous experiments, the following dilution rates were utilized:
0,011 1/h
0,022 1/h
0,033 1/h
0,044 1/h - wash out occured which means, that this dilution rate is bigger than the actual maximal growth rate of the strain. In fact, it was also shown by the curve fitting of the batch experiments, that the maximal growth rate was 0,043 1/h.

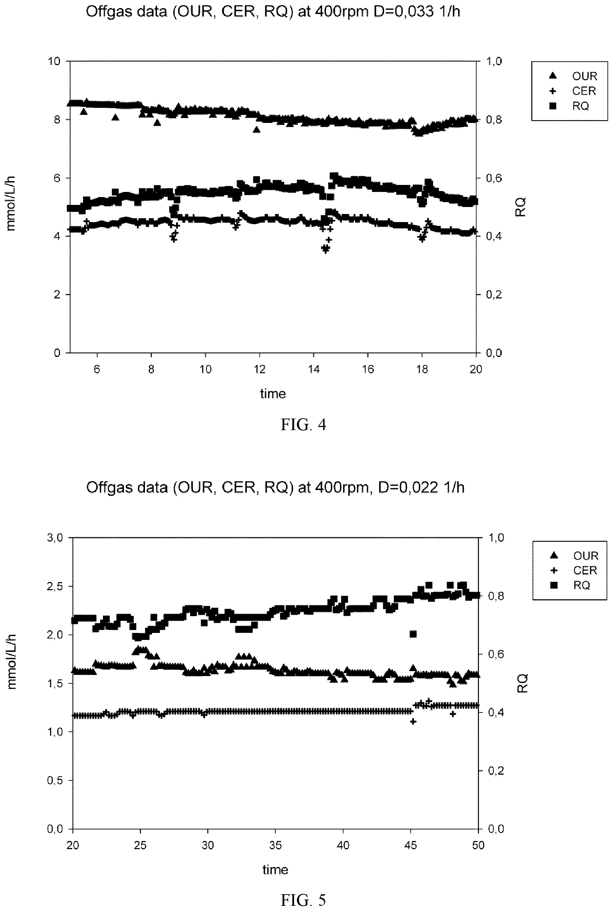

In order to characterize the continuous experiments, OUR (oxygen uptake rate, mmol/L/h), CER (carbon dioxide evolution rate, mmol/L/h), RQ (respiration quotient) and the yields on the substrate (oxygen: YO₂/S, carbon-dioxide: YCO₂/S, biomass: YX/S) were always calculated. Overall carbon balance and DoR (degree of reduction) balance were calculated as well. As an example Fig. 4 shows OUR (upper curve, mmol/L/h), CER (lower curve, mmol/L/h) and RQ (-) values at D=0,033 1/h dilution rate and at 400 rpm agitation in steady-state for HFX continuous experiments.

### Example 3: Agitation in the bioreactor

The more the agitation is increased, the more the cells are prone to be disrupted. Hence, insufficient agitation and disruption of cells has to be avoided.

Based on batch experiments, 400 rpm was chosen as a sufficient agitation for the bioprocess, as the cells were not disrupted and the RQ value was also in an expected range for aerobic bioprocesses (around 0,7). At 400 rpm, OUR, CER and RQ values were also calculated. However, the residual substrate concentration in the steady-state of the continuous experiments could not be decreased to zero at low agitation in all experiments.

Thus, agitation was switched from 400 rpm to 500 rpm and to 600 rpm in continuous operation mode. The effects of the agitation change were observed on the activity in the bioreactor.

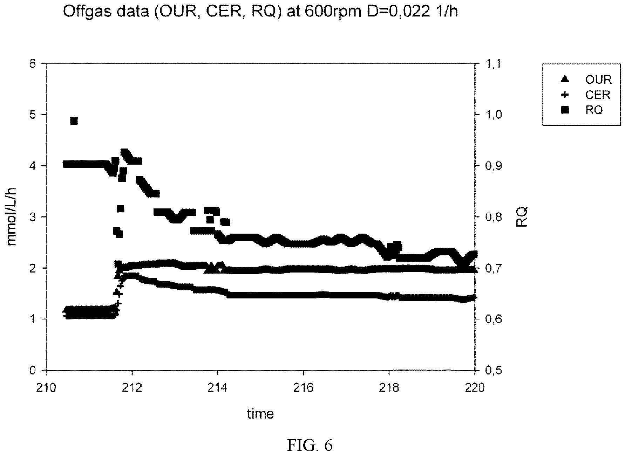

With switching the agitation from 400 rpm to 500 rpm or to 600 rpm, CO₂ signal was immediately increasing and the O₂ signal was decreasing. In one hand, at the first glance, it means increased activity in the bioreactor so that the previous less agitation was limitative for the culture (Fig. 5 at 400 rpm and Fig. 6 at 600 rpm at the same dilution rate). On the other hand, higher agitation seemed too much for the cells.

Concluding that the low agitation, the reason for inhomogeneous and not sufficient 02 distribution in the bioreactor, can also be a limiting factor, the effect of agitation in continuous operation mode is different. The following values were set in the bioreactor and lead to the following results:
Agitation 400 rpm:
   - Limitation in bioreactor - less activity
   - Cells are not disrupted - possibility of offline sample handling and dry weight determination
Agitation: 500 rpm and 600 rpm
   - Shortly after switch to higher agitation - increased activity in the bioreactor
   - Due to cell disruption in bioreactor at higher agitation, after a couple of time the activity tends to decrease during cultivation
   - Cells are damaged which made the utilization of standard dry weight determination methods impossible (cell debris cannot be centrifuged at 5000 rpm)

### Example 4: Continuous experiments with feeding synthetic medium and brine in different ratios

To find out the approximately ratio between synthetic medium and pure brine, different ratios were evaluated.

In order to obtain first a stable continuous culture, at the beginning, the continuous experiment and previous batch experiment was run on synthetic medium. As the culture reached the steady-state, the feeding was started with different synthetic to brine feeding ratios. The synthetic and brine parallel feeding was carried out with the utilization of two controlling balances and two separate feeding pumps. During the experiments, the dilution rate in total was kept in a constant value.

Prior to the experiments with the brine, the medium components which were necessary for the microbial growth were added to the brine. According to the medium composition in Table 1, every inorganic component except NaCl was added. Moreover, since the glycerol concentration of the brine was ca. 1.5 g/L referred to the analysis reports, the substrate concentration was completed to 10g/L in the brine, as in the synthetic medium. Hence, the glycerol concentration in the feed for the continuous culture was independent from the synthetic:brine feeding ratio and could be considered as constant.

Experiments were made with utilizing brine and pre-treated brine in certain ratios as well. With the pure and also with the pre-treated brine, feeding with 20% and 50% brine content were carried out, without changing the dilution rate in total which was 0,022 1/h.

Referring to the evaluation of the experimental data with mixed feeding, it should be noted that the bigger was the brine: synthetic ratio in the feed the later came the steady state. The reason for the longer waiting times might be the longer adaptation times of the cells to the brine feed. For example, 5 days were spent with waiting for the steady-state after switching to 20% pre-treated brine, the O₂ signal was constantly increasing and the CO₂ signal was constantly decreasing. Furthermore, according to the optical density analytics of the offline samples, the decreasing turbidity of the bioreactor could be detected. Additionally, the color of the bioreactor was also constantly turning into less reddish.

The experimental results showed that with increasing the brine ratio in the feed, the activity in the bioreactor is decreasing. Table 3 shows the results with the simple brine, which was not pre-treated. The decreasing tendency in OUR, CER values and also in the Yields can be observed: with increasing brine ratio the values are decreasing. The same increasing trend can be seen in Table 4 with increasing the ratio of the pre-treated brine. Thus, pre-treatment does not prevent inhibitory effects.

All of the experimental parameters except the feeding ratio were obviously kept constant during the experiments. It should be also noted that the dataset of Table 3 were done with 400 rpm agitation while the dataset of Table 4 were carried out with 600 rpm in the bioreactor. Cells are very sensitive to higher agitation and thereby can be destroyed, but at the same time, limitations were encountered at lower agitation.

Table 3: Continuous experiments at steady-state with different brine ratios and keeping the dilution rate constant at the same time at 0,022 1/h. (Note: all of the experimental parameters are the same)

| | 0% brine | 20% brine | 50% brine |
|---|---|---|---|
| OUR (mmol/L/h) | 5.02 | 3.93 | 3.16 |
| CER (mmol/L/h) | 1.89 | 0.97 | 0.79 |
| RQ (-) | 0.38 | 0.25 | 0.26 |
| Y_{O2/S} (mol/C-mol) | 0.90 | 0.52 | 0.40 |
| Y_{O2/S} (g/g) | 0.94 | 0.55 | 0.42 |
| Y_{CO2/S} (mol/C-mol) | 0.33 | 0.13 | 0.10 |
| Y_{CO2/S} (g/g) | 0.48 | 0.18 | 0.15 |

Table 4: Continuous experiments at steady-state with different pre-treated brine ratios and keeping the dilution rate constant at the same time at 0,022 1/h. (Note: all of the experimental parameters are the same)

| | 0% treated brine | 20% treated brine |
|---|---|---|
| OUR (mmol/L/h) | 2.13 | 1.63 |
| CER (mmol/L/h) | 1.84 | 1.11 |
| RQ (-) | 0.87 | 0.65 |
| Y_{O2/S} (mol/C-mol) | 0.39 | 0.26 |
| Y_{O2/S} (g/g) | 0.41 | 0.28 |
| Y_{CO2/S} (mol/C-mol) | 0.34 | 0.19 |
| Y_{CO2/S} (g/g) | 0.49 | 0.23 |

### DESCRIPTION OF DRAWINGS

Fig. 1 is the schematic structure of the shake flask experiments with utilizing either synthetic medium or brine.
Fig. 2 shows the glycerol uptakes in the batch experiments. Substrate uptakes in course of the exponential phase can be observed.
Fig. 3 shows the base consumption in one batch experiment. The exponential trendline fitting for the base curve can be observed and the maximum growth rate can also be seen as the exponent (µ) of the curve fitting.
Fig. 4 shows OUR (upper curve, mmol/L/h)), CER (lower curve, mmol/L/h) and RQ (-) values at D=0,033 1/h dilution rate and at 400 rpm agitation in steady-state for HFX continuous experiments.
Fig. 5 shows OUR (upper curve, mmol/L/h)), CER (lower curve, mmol/L/h) and RQ (-) values at D=0,022 1/h dilution rate and at 400 rpm agitation in steady-state for HFX continuous experiments.
Fig. 6 shows OUR (middle curve), CER (lower curve) and RQ (upper curve) values at D=0,022 1/h and different agitations: the switch from 400 rpm to 600 rpm can be seen at shortly before process time 212h. Both OUR and CER values were increased at higher agitation.

### REFERENCES

1. Pendashteh, A. R., A. Fakhru'1-Razi, et al. (2010). "Biological treatment of produced water in a sequencing batch reactor by a consortium of isolated halophilic microorganisms." Environ. Technol. 31(11):1229-1239. wastewater: oilfield wastewater
2. Kargi, F. and A. R. Dincer (2000). "Use of halophilic bacteria in biological treatment of saline wastewater by fed-batch operation." Water Environ. Res. 72(2):170-174.
3. Woolard, C. R. and R. L. Irvine (1995). "Treatment of hypersaline wastewater in the sequencing batch reactor." Water Res. 29(4): 1159-68.
4. Lefebvre, O., N. Vasudevan, et al. (2005). "Halophilic biological treatment of tannery soak liquor in a sequencing batch reactor." Water Res. 39(8): 1471-1480.
5. Lefebvre, O., F. Habouzit, et al. (2004). "Treatment of hypersaline industrial wastewater by a microbial consortium in a sequencing batch reactor." Environ. Technol. 25(5): 543-553.
6. Hinteregger, C. and F. Streichsbier (1997). "Halomonas sp., a moderately halophilic strain, for biotreatment of saline phenolic waste-water." Biotechnol. Lett. 19(11): 1099-1102.
7. D. Emerson, S. Chahuan, P. Oriel, J. A. Breznak: Haloferax sp. D1227, a halophilic Archaeon capable of growth on aromatic compounds; Archives of Microbiology Volume 161, Number 6: 445-452.

## Claims

1. Method for the reduction of total organic carbon in a hypersaline solution, including the following steps:
a) provision of a composition by mixing the hypersaline solution or different constituents of the hypersaline solution with at least one cultured halophilic and/or haloalkaliphilic microorganism suspension,
b) cultivation of the composition provided in step a) under defined conditions at which the microorganisms are able to metabolize propane-1,2,3-triol, acetates, and/or oligomers and derivates thereof, as part of the total organic carbon content, and thereby reduction of the total organic carbon.

2. Method according to claim 1, wherein the hypersaline solution has a salinity of at least ≥15 %, preferably ≥20 %, more preferably ≥25 %.

3. Method according to claim 1 or 2, wherein the hypersaline solution is industrial wastewater, preferable brine.

4. Method according to any of the aforementioned claims, wherein the microorganisms in the microorganism suspension is selected from the group of halophilic strains consisting of *Haloferax mediterranei, Halobacterium salinarum* and *Salinibacter ruber* or is selected from the group of haloalkaliphilic strains consisting of *Natronomonas pharaoni, Natronobacterium gregoryi, Natronobacterium magadii, Halorubrum vacuolatum, Natronococcus amylolyticus, Natronococcus occultus* and *Natronorubrum tibetense.*

5. Method according to any of the aforementioned claims, wherein the hypersaline solution has an initial total organic carbon content in the range of 400 ppm to 2500 ppm, preferably 600 ppm to 2500 ppm and a remaining total organic carbon content of less than 100 ppm, preferably less than 50 ppm, more preferably less than 10 ppm.

6. Method according to any of the aforementioned claims, wherein a defined medium is added to the composition provided in step a).

7. Method according to any of the aforementioned claims, wherein the defined conditions in step b) comprise the following fermentation process parameter:
a) pH in the range of 6,8 to 9,5, preferably 6,8 to 8,0 for halophilic microorganism suspension and 8,0 to 9,5 for haloalkalophilic microorganism suspension, and/or
b) temperature in the range of 36°C to 39°C, preferably 38°C, and/or
c) agitation in the range of 200 rpm to 700 rpm, preferably 300 rpm to 600 rpm, more preferably 400 rpm to 500 rpm, and/or
d) air inlet in the range of 0,1 to 1, 5 vvm, preferably 0,15 to 1 vvm, more preferably 0,2-0,5 vvm.

8. Method according to any of the aforementioned claims, wherein the cultivation in step b) leads to a growth rate of the microorganisms that ranges 0,010 1/h to 0,045 1/h, preferably 0,020 to 0,035 1/h.

9. Method according to any of the aforementioned claims, wherein the method is carried out as batch, fed-batch or continuous fermentation process in a non-corrosive bioreactor.

10. Medium composition for halophilic microorganisms, preferably *Haloferax mediterranei,* comprising the following components:
a) Glycerol 1,5 to 10 g/l,
b) NH₄Cl 2 g/l,
c) KH₂PO₄ 0,06 to 0,3 g/l,
d) FeCl₃ 0,005 g/l,
e) NaCl 194 to 250 g/l,
f) MgCl₂ x 6H₂O 3,2 to 16 g/l,
g) MgSO₄ x 7H 4,8 to 24 g/l,
h) CaCl₂ x 6H₂O 1 g/l,
i) KCl 5 g/l,
j) NaHCO₃ 0,2 g/l,
k) KBr 0,5 g/l, and
l) Trace element solution (Fe, Cu, Mn, Zn) 1 ml.

11. Mixture of the medium composition according to claim 10, at least one cultured halophilic microorganism suspension, preferably *Haloferax mediterranei,* and hypersaline brine, wherein the concentration of the brine in relation to the mixture is ≤ 90 %, preferably ≤ 75%, more preferably ≤ 50%.

12. Use of halophilic and/or haloalkaliphilic microorganisms in a method according to any of claims 1 to 9.
